# EUROPÄISCHE PATENTANMELDUNG

(11) **EP 0 770 849 A2**
(43) Veröffentlichungstag der Anmeldung: **02.05.1997**
(21) Anmeldenummer: 96890150.4
(22) Anmeldetag: 25.09.1996
(51) Int. Cl.: G01B 11/24, G01B 11/00

(54) **Vorrichtung zum Ermitteln der Form von tafelförmigen Gegenständen**

(30) Priorität: 23.10.1995 AT 1753/95
(71) Anmelder: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(57) **Zusammenfassung**

Eine Vorrichtung zum Ermitteln der Form von tafelförmigen Gegenständen (1), insbesondere Isolierglasscheiben, weist eine Stützeinrichtung, an welcher der tafelförmige Gegenstand (1) anliegt, optische Sensoren (7), eine Fördereinrichtung (4, 5, 6), um den tafelförmigen Gegenstand (1) und die optischen Sensoren (7) relativ zueinander zu bewegen, und eine Einrichtung zum Ermitteln des Förderweges auf. Es ist eine Vielzahl optischer Sensoren (7) vorgesehen, die in wenigstens einer Reihe (3) ausgerichtet sind, wobei diese Reihe (3) parallel zur Ebene des tafelförmigen Gegenstandes (1) sowie im Winkel zur Förderrichtung (X) ausgerichtet ist. Die in einer Reihe (3) angeordneten optischen Sensoren (7) sind Reflexionslichtschranken. Im Bereich des Gegenstandes (1) (bis zum Randpunkt (9)) werden die Lichtstrahlen reflektiert, daneben jedoch nicht, so daß die Y-Koordinate des Punktes (9) durch den Übergang von Reflexion zu Nicht-Reflexion an dem Sensor (7) bestimmt ist.

## Beschreibung

Die Erfindung betrifft eine Vorrichtung zum Ermitteln der Form von tafelförmigen Gegenständen, insbesondere Isolierglasscheiben.

Eine solche Vorrichtung kann in eine weitgehend beliebig ausgebildete Vorrichtung integriert sein, mit der tafelförmige Gegenstände, insbesondere Isolierglasscheiben, transportiert werden. Beispielsweise kann die Vorrichtung eine Fördervorrichtung sein, mit der Isolierglasscheiben zu einer Versiegelungsvorrichtung transportiert werden.

Insbesondere bei nicht rechteckigen oder quadratischen Gegenständen, insbesondere Isolierglasscheiben, muß die Umrißform genau ermittelt werden, damit die Vorrichtungen für nachfolgende Bearbeitungsvorgänge z.B. eine Vorrichtung zum Versiegeln der Randfugen von Isolierglasscheiben entsprechend gesteuert werden können. Eine Vorrichtung, mit der dies möglich ist, ist beispielsweise aus der DE-40 33 585 A bekannt.

Die in der DE 40 33 585 A beschriebene Vorrichtung weist jedoch den Nachteil auf, daß bei großen Dimensionen von Gegenständen zwei Zeilenkameras vorgesehen sein müssen, um die Kontur erfassen zu können, und daß die Zeilenkameras gegenüber störenden Lichteinflüssen von außen empfindlich sind. Überdies sind gute Zeilenkamaras teuer.

Aufgabe der vorliegenden Erfindung ist es, eine Vorrichtung der eingangs genannten Gattung anzugeben, die schnell und zuverlässig arbeitet, und die kostengünstig herzustellen ist.

Gelöst wird diese Aufgabe erfindungsgemäß dadurch, daß eine Vielzahl optischer Sensoren vorgesehen ist, die in wenigstens einer Reihe ausgerichtet sind, und daß diese Reihe parallel zur Ebene des tafelförmigen Gegenstandes sowie im Winkel zur Förderrichtung ausgerichtet ist.

Mit Hilfe der vorliegenden Erfindung können die Y-Koordinaten_{,} d.h. die Koordinaten normal zur Förderrichtung X_{,} der Randpunkte eines tafelförmigen Gegenstandes, z.B. einer Isolierglasscheibe, auf einfache Weise kontinuierlich dadurch ermittelt werden, daß die optischen Sensoren, die in einer Reihe im Winkel zur Förderrichtung angeordnet sind, ermitteln, bis wohin sich die Glasscheibe in Y-Richtung erstreckt. Die zugehörigen X-Koordinaten der Randpunkte werden z.B. durch einen Weggeber ermittelt, welcher der Fördereinrichtung zugeordnet ist, so daß in einem einzigen Durchlauf, bei dem der tafelförmige Gegenstand an der Reihe von optischen Sensoren vorbeibewegt wird, die gesamte Außenkontur des tafelförmigen Gegenstandes, z.B. einer Isolierglasscheibe ermittelt werden kann.

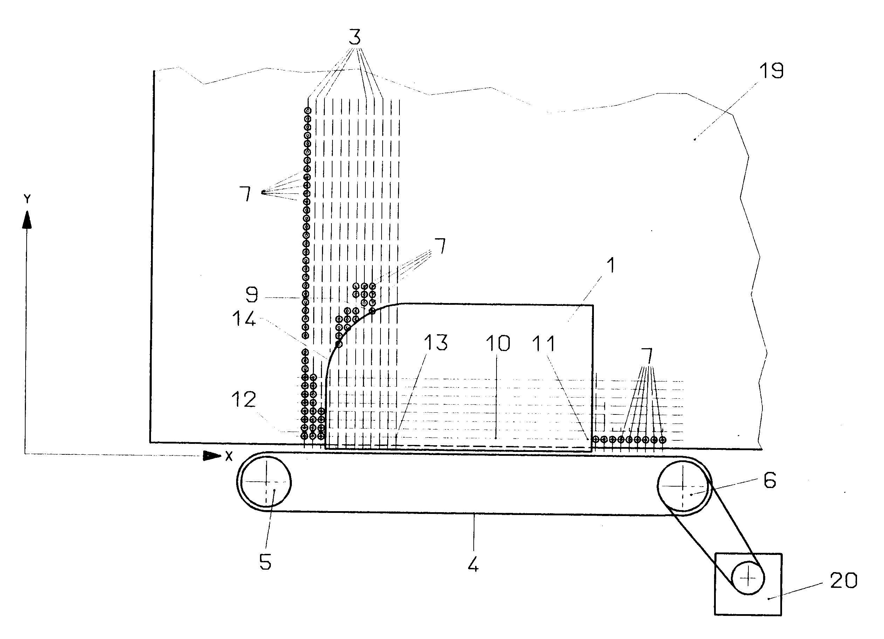

Weitere Merkmale und Vorteile der Erfindung ergeben sich aus den Unteransprüchen und der nachfolgenden Beschreibung von Ausführungsbeispielen der Erfindung unter Bezugnahme auf die Zeichnung.

In der Zeichnung ist schematisch eine erfindungsgemäße Vorrichtung dargestellt, die im wesentlichen aus einer Stützeinrichtung 2 und einer Fördereinrichtung, z.B. einem Förderband 4, oder einer Reihe von Förderrollen besteht. Die Stützeinrichtung 2 ist, wie an sich bekannt, eine Stützwand, die um etwa 5 bis 8° aus der Vertikalen nach hinten geneigt ist, und an der der tafelförmige Gegenstand, z.B. eine beliebig geformte Glasscheibe 1, insbesondere eine Isolierglasscheibe anliegt. In die Stützwand können Förderbänder oder Förderrollen integriert sein, die auch angetrieben sein können. Auch Luftkissenwände sind als Stützeinrichtung verwendbar.

In einer anderen Ausführungsform ist die Stützeinrichtung 2 ein waagerechter (Luftkissen-)Tisch, auf dem die Glasscheibe 1 waagrecht aufliegt und von Förderrollen oder Förderbändern angetrieben in Richtung des Pfeiles X gefördert wird.

Im in der Zeichnung dargestellten Ausführungsbeispiel steht die Glasscheibe 1 mit ihrem unteren Rand auf dem Förderband 4 auf, das über Umlenkrollen 5, 6 läuft und beispielsweise von der Umlenkrolle 6 angetrieben wird. Mit dem Förderband 4, einer Umlenkrolle 5, 6 oder mit dem Antrieb des Förderbandes 4 ist ein Weggeber 20 verbunden, der in einer Ausführungsform zum Ermitteln der X-Koordinaten von Randpunkten 9, 11, 12 der Glasscheibe 1 dient. In der Stützeinrichtung 2 sind optische Sensoren 7, die zum Ermitteln der Y-Koordinaten von Randpunkten 9, 11, 12 der Glasscheibe 1 dienen, vorgesehen. Diese Sensoren 7, die beispielsweise Reflexionslischtschranken sind, sind in einer Reihe 3 angeordnet, die parallel zur Förderebene der Glasscheibe 1 und im rechten Winkel zur Förderrichtung X ausgerichtet ist.

Die X-Y-Koordinaten eines Randpunktes 9 der Glasscheibe 1 können mit der erfindungsgemäßen Vorrichtung wie folgt ermittelt werden. Die Lichtstrahlen der Reflexionslichtschranken aller Sensoren 7, die zwischen dem unteren Ende 13 der Reihe 3 und dem Randpunkt 9 der Glasscheibe 1 angeordnet sind, werden reflektiert. Über dem Randpunkt 9 liegende Sensoren 7 sprechen nicht an, da die Lichtstrahlen ihrer Reflexionslichtschranken nicht reflektiert werden. Die Y-Koordinate des Randpunktes 9 wird durch den Wechsel von Reflexion zu Nicht-Reflexion (höchste reflektierte Lichtschranke/niederste nicht reflektierte Lichtschranke) bestimmt. Die zugehörige X-Koordinate des Randpunktes 9 wird z.B. dadurch ermittelt, daß beim Heranfördern der Glastafel 1 die Messung der X-Koordinate durch den Weggeber 20 dadurch ausgelöst wird, daß das Licht der Reflexionslichtschranken der Sensoren 7 in der Reihe 3 durch den vorderen Rand der Glastafel 1 reflektiert wird und daß anschließend die X-Koordinate bis zum Randpunkt 9 ermittelt wird, indem der Vorschubweg durch den Weggeber 20 gemessen wird.

Alternativ kann vorgesehen sein, daß anstatt eines Weggebers 20, der z.B. dem Förderband 4 zugeordnet ist, eine zweite Reihe 10 von optischen Sensoren 7, z.B. Reflexionslichtschranken, vorgesehen ist, die in Förderrichtung X ausgerichtet ist. Die X-Koordinate des Randpunktes 9 kann in diesem Fall auch so ermittelt werden, daß der Abstand in X-Richtung zwischen dem Randpunkt 9 an der Reihe 3 von Sensoren 7 und dem Randpunkt 11 und/oder 12, der beim Fördern der Glastafel 1 in X-Richtung ein sich ständig änderndes Meßsignal in der Reihe 10 von Sensoren 7 auslöst, ermittelt wird.

Im Rahmen der Erfindung sind Änderungen der in der Zeichnung dargestellten Ausführungsformen möglich. So kann z.B. die Reihe 3 von Sensoren 7 in einem Winkel kleiner oder größer 90° zur Förderrichtung X ausgerichtet sein. Es kann auch ein dem Förderband 4 zugeordneter Weggeber mit einer Reihe 10 von Sensoren 7, die parallel zur Förderrichtung ausgerichtet ist, kombiniert sein.

Des weiteren können statt Reflexionslichtschranken als Sensoren 7 Lichtschranken verwendet werden, bei welchen die Glastafel 1 zwischen einander gegenüberliegender Reihen optischer Sensoren und optischer Empfänger durchgeführt wird.

In einer anderen Ausführungsform steht die Glastafel 1 still und ein Balken, an dem eine Reihe 3 optischer Sensoren 7 angeordnet ist, wird an der Glastafel vorbeibewegt.

Es ist auch möglich, eine Vielzahl von Reihen 3 und/oder 10 von optischen Sensoren 7 vorzusehen, wobei die untersten Sensoren 7 jeder Reihe 3 gemeinsam die parallel zur Förderrichtung ausgerichtete Reihe 10 von Sensoren 7 bilden. Mit Vorteil ist dabei vorgesehen, daß die Sensoren 7 über die Stützeinrichtung 2, beispielsweise die Luftkissenstützwand, verteilt angeordnet sind. Beispielsweise sind die Sensoren 7 in mehreren äquidistanten, zueinander parallelen Reihen 3 und/oder 10 angeordnet und besitzen in jeder Reihe 3 und/oder 10 voneinander identische Abstände.

Da es technisch nicht oder nur schwer möglich ist, die optischen Senoren 7 mit einem theoretischen Abstand von Null nebeneinander anzuordnen und dies auch aus wirtschaftlichen Gründen nicht sinnvoll ist, treten, wenn z.B. die Kontur der in der Zeichnung dargestellten Glastafel 1 ermittelt wird, im Bereich des gekrümmten Abschnittes 14 der Außenkontur Sprünge in den Meßdaten auf. Die Kurve kann jedoch auf einfache Weise mathematisch geglättet werden. Es ist auch möglich, daß zwei oder mehrere Reihen von zueinander versetzt angeordneten optischen Sensoren 7 nebeneinander angeordnet sind, um die Meßgenauigkeit zu erhöhen.

Die optischen Sensoren 7 können in der Reihe 3 (senkrecht zur Förderrichtung X) und/oder in der Reihe 10 (parallel zur Förderrichtung X) auch in zwei knapp nebeneinander liegenden Reihen angeordnet sein, wobei die Sensoren 7 einer Reihe zu den Sensoren 7 der benachbarten Reihe auf Lücke angeordnet sind. So wird der (konstruktionsbedingte) Abstand der Sensoren 7 einer Reihe voneinander verkleinert.

Zusammenfassend kann ein Ausführungsbeispiel der Erfindung wie folgt dargestellt werden:
Eine Vorrichtung zum Ermitteln der Form von tafelförmigen Gegenständen, insbesondere Isolierglasscheiben, weist eine Stützeinrichtung, an welcher der tafelförmige Gegenstand anliegt, optische Sensoren, eine Fördereinrichtung, um den tafelförmigen Gegenstand und die optischen Sensoren relativ zueinander zu bewegen, und eine Einrichtung zum Ermitteln des Förderweges auf. Es ist eine Vielzahl optischer Sensoren vorgesehen, die in wenigstens einer Reihe ausgerichtet sind, wobei diese Reihe parallel zur Ebene des tafelförmigen Gegenstandes sowie im Winkel zur Förderrichtung (X) ausgerichtet ist. Die in einer Reihe angeordneten optischen Sensoren sind bevorzugt Reflexionslichtschranken. Im Bereich des Gegenstandes (bis zu dessen Rand) werden die Lichtstrahlen reflektiert, daneben jedoch nicht, so daß die Y-Koordinate des Punktes durch den Übergang von Reflexion zu Nicht-Reflexion an der Reflexionslichtschranke bestimmt ist.

## Patentansprüche

1. Vorrichtung zum Ermitteln der Form von tafelförmigen Gegenständen (1), insbesondere Isolierglasscheiben, mit optischen Sensoren (7), mit einer Einrichtung (4), um den tafelförmigen Gegenstand (1) und die optischen Sensoren (7) relativ zueinander zu bewegen und mit einer Einrichtung (20) zum Ermitteln des Förderweges, dadurch gekennzeichnet, daß eine Vielzahl optischer Sensoren (7) vorgesehen ist, die in wenigstens einer Reihe (3) ausgerichtet sind, und daß diese Reihe (3) parallel zur Ebene des tafelförmigen Gegenstandes (1) sowie im Winkel zur Förderrichtung (X) ausgerichtet ist.

2. Vorrichtung nach Anspruch 1, dadurch gekennzeichnet, daß die Reihe (3) im rechten Winkel zur Förderrichtung (X) ausgerichtet ist.

3. Vorrichtung nach Anspruch 1, dadurch gekennzeichnet, daß die Reihe (3) im Winkel ungleich 90° zur Förderrichtung (X) ausgerichtet ist.

4. Vorrichtung nach einem der Ansprüche 1 bis 3, dadurch gekennzeichnet, daß die Fördereinrichtung (4, 5, 6) ein Transportband ist.

5. Vorrichtung nach einem der Ansprüche 1 bis 4, dadurch gekennzeichnet, daß der Fördereinrichtung (4, 5, 6) ein Weggeber zum Bestimmen des Förderweges zugeordnet ist.

6. Vorrichtung nach einem der Ansprüche 1 bis 4, dadurch gekennzeichnet, daß die Einrichtung zum Bestimmen des Förderweges eine Reihe (10) von optischen Sensoren (7) ist, die sich in Förderrichtung (X) erstreckt.

7. Vorrichtung nach einem der Ansprüche 1 bis 6, dadurch gekennzeichnet, daß mehrere Reihen (3) von Sensoren (7) vorgesehen sind, deren im Bereich der Fördereinrichtung (4) angeordneten Sensoren (7) die Reihe (10) von Sensoren (7) zum Bestimmen des Förderweges bilden.

8. Vorrichtung nach einem der Ansprüche 1 bis 7, dadurch gekennzeichnet, daß die Sensoren (7) im wesentlichen über die gesamte Fläche einer sich von der Fördereinrichtung (4) nach oben erstreckenden Stützeinrichtung (2), entlang welcher die tafelförmigen Gegenstände (1) gefördert werden, verteilt angeordnet sind.

9. Vorrichtung nach Anspruch 8, dadurch gekennzeichnet, daß die Sensoren (7) über die Stützeinrichtung (2) gleichmäßig verteilt angeordnet sind.

10. Vorrichtung nach einem der Ansprüche 1 bis 9, dadurch gekennzeichnet, daß die optischen Sensoren (7) Reflexionslichtschranken sind.

11. Vorrichtung nach einem der Ansprüche 1 bis 10, dadurch gekennzeichnet, daß sie eine Auswerte- und Speichereinheit für die Meßdaten aufweist.

12. Vorrichtung nach einem der Ansprüche 1 bis 11, dadurch gekennzeichnet, daß die Meßdaten an eine nachfolgende Bearbeitungsvorrichtung weitergeleitet werden.
